(19) Europäisches Patentamt
European Patent Office
Office européen des brevets

(11) Veröffentlichungsnummer: **0 015 569**
**B1**

(12) # EUROPÄISCHE PATENTSCHRIFT

(45) Veröffentlichungstag der Patentschrift: **01.12.82**

(51) Int. Cl.³: **B 01 J 37/02** // B01J35/08, B01J35/10, B01J23/88

(21) Anmeldenummer: **80101162.8**

(22) Anmeldetag: **07.03.80**

(54) **Verfahren zur Herstellung von Schalenkatalysatoren.**

(30) Priorität: **12.03.79 DE 2909670**

(43) Veröffentlichungstag der Anmeldung: **17.09.80 Patentblatt 80/19**

(45) Bekanntmachung des Hinweises auf die Patenterteilung: **01.12.82 Patentblatt 82/48**

(84) Benannte Vertragsstaaten: **BE DE FR**

(56) Entgegenhaltungen:
**DE-A-1 442 590**
**DE-A-2 126 534**
**DE-A-2 147 480**
**DE-A-2 626 887**
**DE-B-1 280 756**
**DE-C-899 648**
**GB-A-1 305 810**
**GB-A-1 385 496**
**US-A-3 671 432**

(73) Patentinhaber: **BASF Aktiengesellschaft, Carl-Bosch-Strasse 38, D-6700 Ludwigshafen (DE)**

(72) Erfinder: **Krabetz, Richard, Dr., Unterer Waldweg 8, D-6719 Kirschheim (DE)**
Erfinder: **Engelbach, Heinz, Dr., Kropsburger Strasse 24, D-6703 Limburgerhof (DE)**
Erfinder: **Palm, Peter, Hauptstrasse 46, D-6711 Gerolsheim (DE)**
Erfinder: **Spahn, Heinrich, Dr., Moltkestrasse 13, D-6800 Mannheim 1 (DE)**
Erfinder: **Herrmann, Walter, Dr., Pommernstrasse 105, D-6800 Mannheim1 (DE)**

EP 0 015 569 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Schalenkatalysatoren

Die Erfindung betrifft ein neues Verfahren zur Herstellung von Schalenkatalysatoren durch Aufsprühen von suspensionen von katalytisch aktivem Material in leicht verdampfenden benetzenden Flüssigkeiten auf bewegte Trägerteilchen.

Aus der GB-A Nr. 1346943 ist bekannt, dass man Schalenkatalysatoren, bestehend aus einem Träger und einer darauf aufgebrachten Schicht aus katalytisch aktivem Material dadurch herstellen kann, dass man das katalytisch aktive Material mit Hilfe des Plasmaspritz- oder Flammspritzverfahrens auf den Träger aufbringt. Voraussetzung für die Anwendung des Verfahrens ist die Schmelzbarkeit mindestens einer Hauptkomponente bei der Arbeitstemperatur des Flammspritz- oder des Plasmabrenners. Das Verfahren wird in der Weise durchgeführt, dass man die aktiven Komponenten oder die Substanzen, die sich bei der Arbeitstemperatur der Brenner in die gewünschten oxidischen und katalytisch aktiven Verbindungen zersetzen lassen, in die Flamme bzw. den Plasmastrahl in bekannter Weise einbringt. Die Flamme bzw. der Plasmastrahl wird auf die zu beschichtenden Teilchen gerichtet, die vorzugsweise z.B. in einer rotierenden Trommel in Bewegung gehalten werden. Die so hergestellten Katalysatoren werden z.B. für die Oxidation von Indanen verwendet, wobei als katalytisch aktive Schichten Vanadinpentoxidschichten oder Schichten aus Molybdänoxid und/oder Wolframoxid auf Trägerteilchen aufgebracht werden. Die auf bekannte Weise des Auftrags mittels Zerstäubung in einem Vergleichsbeispiel erhaltenen Katalysatoren liefern im Vergleich zu den Ausbeuten des Verfahrens der GB-A Nr. 1346943 (45%) nur eine Ausbeute von 13,8%.

Obwohl das vorgenannte Verfahren im Hinblick auf ältere Verfahren bessere Ausbeuten liefert, ist es doch nicht völlig befriedigend. Beim Plasma- und beim Flammspritzverfahren muss das aktive Material dem Brenner mittels pneumatischer Förderung zugeführt werden. Diese Art der Zuführung erfordert ein gut rieselfähiges Material und lässt sich nur dann völlig störungsfrei durchführen, wenn der Kornbereich der aktiven Masse etwa zwischen 50 und 200 µm liegt und das Einzelkorn möglichst kugelförmig ist. Die Herstellung einer solchen Kornform und Kornverteilung ist im grosstechnischen Massstab mit Schwierigkeiten verbunden. Sie gelingt am besten durch Schmelzen und anschliessendes Versprühen der aktiven Masse mit einem Gasstrom, wobei das Sprühgut mit einer Korngrösse $< 50$ µm und $> 200$ µm zurückgeführt wird. Nachteilig ist bei dieser Herstellung der optimalen Kornverteilung der hohe Energieverbrauch sowie die wegen der Giftigkeit von z.B. Vanadin erforderlich werdende kostspielige Gasreinigung mittels Wäsche und Elektroabscheider. Eine ähnlich aufwendige Gasreinigung ist aber auch für den Flammspritzvorgang selber erforderlich, da nur 50 bis 70% des dem Brenner zugeführten aktiven Materials auf den Trägerkugeln aufgeschmolzen wird; der Rest muss aus dem Abgas zurückgewonnen werden. Der Hauptnachteil des Verfahrens besteht darin, dass die Aktivität von über die Schmelzphase hergestellten aktiven Massen für viele Verfahren unzureichend ist.

Aus der US-A Nr. 3956377 ist ein spezielles Verfahren zur Herstellung von Schalenkatalysatoren für die Gasphasenoxidation von (Meth)-Acrolein zu (Meth)-Acrylsäure bekannt, bei dem man z.B. Molybdänoxid, Vanadinoxid und Wolframmetallpulver durch Erhitzen unter Rückfluss in Wasser löst, die erhaltene Aufschlämmung eindampft und mehrere Tage bei 115°C trocknet. Die auf diese Weise erhaltene aktive Katalysatormasse wird dann auf das zuvor mit Wasser angefeuchtete Trägermaterial aufgebracht, indem das feuchte Trägermaterial in einem Pulver des aktiven Katalysators gewälzt wird. Ein derartiges Verfahren ist auch aus der US-A Nr. 4077912 bekannt. Katalysatoren, die auf diese Weise hergestellt sind, sind häufig wenig aktiv, insbesondere da sie hinsichtlich des Anteils an katalytisch aktiver Masse in der Schale begrenzt sind durch die Porosität und damit das Wasseraufnahmevermögen des Trägers. Ein weiterer Nachteil der Methode besteht darin, dass der Befeuchtungsgrad der jeweiligen Oberflächenschicht während des Beschichtungsvorganges keinen stationären Wert besitzt, was die Haftfestigkeit beeinträchtigt und zu Verklebungen der Trägerteilchen unter Bildung von Zwillingen und Drillingen und zu unterschiedlichen Schalendicken führen kann.

Aus der US-A Nr. 2035606 (S. 3), der GB-A Nr. 1385496 und der DE-A Nr. 2626887 (besonders Beispiele 10-14) ist es schliesslich bekannt, dass man Schalenkatalysatoren herstellen kann, indem man wässrige Suspensionen des katalytisch aktiven Materials auf die bewegten Trägerteilchen sprüht, wobei die Trägerteilchen z.B. gemäss der US-A Nr. 3562185 und der GB-A Nr. 1385496 auf Temperaturen über 150°C, bei Mitverwendung von Kunstharzdispersionen auf etwa 70 bis 130°C erhitzt sein können. Dabei erhält man jedoch bei der schlagartigen Verdampfung des Suspensionsmediums, wenn die Trägerteilchen Temperaturen von z.B. 150°C und mehr aufweisen, häufig Schalenkatalysatoren mit unzureichender Abriebfestigkeit der katalytisch aktiven Schale und hohe Verluste an aktiver Masse. Bei Mitverwendung von Kunstharzdispersionen wird der Beschichtungsvorgang durch schwer kontrollierbare Filmbildungsprozesse erschwert, ausserdem muss das Kunstharz anschliessend herausgebrannt werden, wobei eine Lockerung des Strukturgefüges und eine thermische Schädigung der Aktivität eintreten kann. Bei dem Verfahren der DE-A Nr. 2626887, bei dem bei Temperaturen von 25 bis 80°C gearbeitet werden kann, kommt es leicht zur Bildung von agglomerierten Teilchen.

Aus der DE-A Nr. 1442590 ist es ferner bekannt, Vanadin- und Titan-haltige Katalysatoren herzustellen, indem man nichtporöse kugelförmige Trägerteilchen in einem Brei von Titandioxid und Vanadyloxalat wälzt oder rollt wobei Heissluft übergeleitet werden kann. Danach werden die überzogenen Kugeln bei 200 bis 600°C zur Zersetzung der eingesetzten organischen Substanzen bzw. der löslichen Metallsalze in unlösliche Oxide getempert.

Es wurde nun gefunden, dass man Schalenkatalysatoren mit a) einem inerten Träger eines Teilchendurchmessers von mindestens 100 µm und einer Oberfläche bis 20 $m^2/g$ und b) einer auf der äusseren Oberfläche und in der oberflächennahen, inneren Randzone der Trägerteilchen festhaftenden Schale, die das katalytisch aktive Material enthält, durch Aufbringen des katalytisch aktiven Materials als 10 bis 70%ige Suspension in Wasser auf die bewegten Trägerteilchen bei einer Temperatur des Trägers unterhalb 70°C und anschliessendes Trocknen der beschichteten Trägerteilchen mit Vorteil herstellen kann, indem man die Suspension in einer gleichbleibenden Menge von 0,01 bis 2,0 kg aktives Material/h/l Träger unter gleichmässigem Überleiten von 0,1 bis 12 $Nm^3/h/l$ Träger eines indifferenten Gases einer Temperatur von 20 bis 150°C derart auf die Trägerteilchen sprüht, dass der Wassergehalt der entstehenden Schale 30 bis 95% des maximalen Sättigungsgrads des katalytisch aktiven Materials beträgt und während der Dauer des Aufsprühens der Suspension praktisch konstant bleibt. Werden bei dem neuen Verfahren poröse Träger eingesetzt, so soll deren mittlerer Porendurchmesser bevorzugt über 20 µm betragen und die Teilchengrösse des katalytisch aktiven Materials soll dann kleiner sein als der mittlere Porendurchmesser des Trägers. In diesem Fall kann es vorteilhaft sein, den Träger vor dem Aufsprühen der Suspension des katalytisch aktiven Materials auf 1 bis 30% des maximalen Wasseraufnahmewertes (Sättigungswertes) mit Wasser vorzubefeuchten.

Es zeigte sich überraschend, dass das erfindungsgemässe Verfahren im Gegensatz zu den bekannten Verfahren auch bei der Herstellung von Katalysatorchargen im technischen Massstab Schalenkatalysatoren mit sehr einheitlicher Verteilung der aktiven Masse auf den Trägerteilchen ohne Agglomeration der Katalysatorteilchen und mit einer hohen Abriebfestigkeit liefert, was zu einer Verbesserung der durchschnittlichen Selektivität oder Raumzeitausbeute technischer Chargen führt. Ein weiterer überraschender Vorteil des erfindungsgemässen Verfahrens besteht darin, dass auch bei Gewichtsanteilen der aktiven Massen von über 100 und sogar 150 Gew.%, bezogen auf den Träger, bzw. bei Schalendicken über 0,8 mm noch Schalenkatalysatoren mit guter Abriebfestigkeit erhalten werden, was beim technischen Einsatz von Schalenkatalysatoren bei bestimmten Prozessen, z.B. der Oxidation von Isobuten zu Methacrolein, von Bedeutung ist.

Für das neue Verfahren zur Herstellung von Schalenkatalysatoren kommen die üblichen Trägermaterialien, wie Aluminiumoxide, Siliziumdioxid und Silikate, beispielsweise Magnesiumsilikate, Aluminiumsilikate sowie Siliziumcarbid in Frage. Die Teilchen des Trägermaterials können ungeformt oder geformt sein, wobei geformte Träger mit deutlich ausgebildeter Oberflächenrauhigkeit, beispielsweise Kugeln oder Ringe bevorzugt werden. Der Teilchendurchmesser der Träger soll mindestens 100 µm betragen und liegt vorzugsweise im Bereich von 0,5 bis 12 mm, insbesondere 2 bis 9 mm. Die Träger können porös oder unporös sein, doch sollen poröse Träger einen mittleren Porendurchmesser von mindestens 20 µm, vorzugsweise mindestens 50 µm aufweisen. Sollen die fertigen Katalysatoren für Reaktionen eingesetzt werden, die bei Temperaturen oberhalb etwa 350°C ablaufen, so werden Träger bevorzugt, deren innere Oberfläche unter 5, insbesondere unter 2 $m^2/g$ und deren Porosität im allgemeinen 0 bis 10% beträgt. Sollen die fertigen Schalenkatalysatoren bei Temperaturen eingesetzt werden, die unterhalb etwa 300°C liegen, so können auch Träger mit Porositäten über 10% vorteilhaft sein. Träger, die eine Wasseraufnahme unter 20 Gew.% aufweisen, insbesondere von 1 bis 10 Gew.%, bezogen auf das Trägergewicht, kommen für die Herstellung der neuen Schalenkatalysatoren bevorzugt in Betracht.

Die Art, bzw. die Zusammensetzung des katalytisch aktiven Materials ist für das neue Verfahren nicht spezifisch; grundsätzlich kann nach dem neuen Verfahren jedes katalytisch aktive Material auf Träger aufgebracht werden. In Frage kommen alle bekannten üblichen, insbesondere für stark exotherme Reaktionen geeignete Katalysatormassen, insbesondere auf Basis von Metalloxiden, Metalloxidmischungen und/oder Metallmischoxiden, wie sie insbesondere für katalytische Oxidationsreaktionen, beispielsweise die katalytische Oxidation von α-Olefinen, wie Propen und Isobutylen, zu α, β-olefinisch ungesättigten Aldehyden, wie besonders Acrolein und Methacrolein sowie von Kohlenwasserstoffen, wie Butan oder Buten, zu Maleinsäureanhydrid, o-Xylol zu Phthalsäureanhydrid, o- und p-substituierte Alkylbenzole, zu o- und p-substituierten Benzaldehyden oder die oxidative Dehydrierung von Kohlenwasserstoffen oder Alkoholen eingesetzt werden. Derartige katalytisch aktive Massen sind beispielsweise in der GB-PS Nrn. 1491750, 1249290, 1351218, 1416099 und der 1305810 beschrieben. Von besonderem Interesse sind die für die (Meth)-Acroleinoxidation zu (Meth)-Acrylsäure üblichen katalytisch aktiven Massen auf Basis von Oxiden bzw. Mischoxiden, die Molybdän, Vanadin, Wolfram, Kupfer und/oder Eisen, sowie untergeordnete Mengen an Alkali- und Erdalkalimetallen und gegebenenfalls weitere metalloxidische Komponenten enthalten und wie sie besonders in der DE-OS Nr. 2626887 beschrieben sind. Katalytisch aktives Material dieser Art, das in üblicher Weise hergestellt und calciniert ist, hat vorzugsweise die Zusammensetzung

$$Mo_{12}V_aW_bA_cB_dO_x,$$

in der

A für Cu und/oder Eisen,

B für Ni, Mn, Sn, Sb, Cr, Ca, Sr, Ba, Mg, Na, K, Rb, Cs und/oder P,

a für 0,5 bis 16, vorzugsweise 1 bis 6,
b für 0,1 bis 8, vorzugsweise 0,5 bis 3,
c für 0,5 bis 6, vorzugsweise 1 bis 5, insbesondere 1,5 bis 3,
d für 0 bis 3, und
x für die Zahl der zur Absättigung der Valenzen der anderen Bestandteile erforderlichen Sauerstoffatome stehen.

Von den Komponenten B sind die Alkali- und Erdalkalimetalle sowie vor allem P bei der Methacroleinoxidation in Mengen von d = 0,1 bis 3 von besonderem Vorteil, während sie bei der Acroleinoxidation im allgemeinen nur in Mengen von d = 0 bis 0,1 in Frage kommen. Für die Methacroleinoxidation sind aktive Massen mit den Grundkomponenten Molybdän, Vanadin, Phosphor und Alkali besonders geeignet.

Calciniertes katalytisch aktives Material, das für die Gasphasenoxidation von Olefinen, wie besonders Propylen geeignet ist, hat vorzugsweise die Zusammensetzung

$$Mo_{12}Bi_aFe_bX_cY_dZ_eO_x,$$

in der
X für Ni und/oder Co und gegebenenfalls zusätzlich Sn, Zn und/oder Mg,
Y für K, Na, Rb, Cs, In, Sb und/oder Tl,
Z für P und/oder B,
a für 0,1 bis 4, vorzugsweise 0,2 bis 3,
b für 0,5 bis 6, vorzugsweise 1 bis 4,
c für 2 bis 12, vorzugsweise 4 bis 11,
d für 0,01 bis 1, vorzugsweise 0,04 bis 0,5,
e für 0 bis 3, vorzugsweise 0,01 bis 2,5,
x für die Zahl der zur Absättigung der Valenzen der anderen Bestandteile erforderliche Sauerstoffatome stehen. Dabei soll im allgemeinen bei X für Sn, Zn und Mg der Wert für c 0 bis 3, vorzugsweise 0,5 bis 3 sein und für Co-freie katalytisch aktive Materialien 6 bis 11 betragen, wobei der Anteil für den Ni-Gehalt in c auch bei Sn, Zn und/oder Mg zusätzlich enthaltende Materialien mindestens 6 ist. Katalytisch aktive Materialien, in denen Y für In und mindestens eines der Metalle K, Rb und Cs steht, sind für die Gasphasenoxidation von Propylen zu Acrolein und Acrylsäure unter sonst üblichen Bedingungen von besonderem Interesse. Katalytisch aktive Materialien dieser Art sind u.a. in der DE-A Nr. 2147480 erwähnt.

Bei dem neuen Verfahren wird das katalytisch aktive Material in der Regel in seiner fertigen katalytisch aktiven Form aufgebracht, beispielsweise als calciniertes Mischoxid, das nach der Calcinierung auf die vorgesehene Teilchengrösse vermahlen ist. In manchen Fällen ist es aber auch von Vorteil, das Calcinieren des katalytisch aktiven Materials erst nach der Herstellung des Schalenkatalysators vorzunehmen. Die Teilchengrösse des aktiven katalytischen Materials liegt unter 50 µm, vorzugsweise zu 90 Gew.% unter 30 µm, insbesondere zwischen 0,1 und 25 µm. Sollen die Katalysatoren als aktive katalytische Masse Metalle enthalten, so können diese gegebenenfalls als Oxide aufgebracht werden, wobei dann die erhaltenen Schalenkatalysatoren nach dem Trocknen reduziert werden, was unmittelbar vor ihrem Einsatz im technischen Reaktor durchgeführt werden kann. Bevorzugt wird jedoch auch in diesem Fall eine Beschichtung des Trägers mit der aktiven katalytischen Masse, d.h. hier z.B. mit den katalytisch aktiven Metallen, die auf oxidische Komponenten aufgefällt sein können, so dass eine Nachbehandlung nicht erforderlich ist.

Das Aufbringen des katalytisch aktiven Materials erfolgt meist als 10 bis 70%ige, vorzugsweise 25 bis 60%ige Suspension in Wasser. Verdünntere Suspensionen sind zwar möglicht aber im allgemeinen energieaufwendiger. Auch Gemische aus Wasser und damit mischbaren Lösungsmitteln, wie Alkohole, kommen in Frage.

Beim Aufbringen der Suspension auf die bewegten Trägerteilchen befinden sich diese vorzugsweise in rollender Bewegung und es wird bei einer Temperatur des Trägers unterhalb 70°C gearbeitet. Vorzugsweise soll die Trägertemperatur während der Beschichtung 20 bis 60°C betragen. Besonders bewährt hat sich das Arbeiten in drehbaren Behältern, z.B. in Dragiertrommeln, Dragierkesseln oder Drehtellern, deren Drehachse vorzugsweise einen Neigungswinkel von 30 bis 60°C aufweist. Die Behälter sind vorzugsweise zu 20 bis 80% ihres Volumens mit den Trägerteilchen gefüllt und die Umdrehungszahl beträgt vorzugsweise 1 bis 60 je Minute. Im allgemeinen wird vor Beginn der Beschichtung der Träger indirekt oder vorzugsweise direkt durch Überleiten von heissem Gas auf die gewünschte Temperatur aufgeheizt. Man sprüht dann erfindungsgemäss die Suspension in einer Menge von 0,01 bis 2,0 vorzugsweise von 0,1 bis 1 kg aktives Material/h/l Träger auf und leitet vorzugsweise 0,5 bis 8 $Nm^3$/h/l Träger eines indifferenten Gases durch oder über die in Bewegung befindlichen Teilchen, wobei als indifferentes Gas meist Luft oder Stickstoff in Frage kommt. Das Gas ist dabei auf Temperaturen von 20 bis 150°C erwärmt. Vorzugsweise wird das indifferente Gas durch perforierte Wände eines rotierenden Behälters, beispielsweise einer rotierenden Dragiertrommel geleitet. Bei Verwendung von Zweistoffdüsen für das Versprühen der Suspension stellt das zugeleitete Treibgas im allgemeinen einen Teil des Gases dar, bei ausreichender Treibgasmenge kann in Ausnahmefällen auf zusätzlich eingeführtes indifferentes Gas verzichtet werden, zumal die Dragiertrommel auch indirekt beheizt sein kann. Das erfindungsgemäss zugeführte Gas dient nicht nur dazu, die für die Verdampfung von Wasser erforderliche Verdampfungswärme zuzuführen, sondern soll das Wasser kontinuierlich aufnehmen, und zwar insolcher Menge, dass der Wassergehalt der um die Trägerteilchen entstehenden Schalen 30 bis 95% des maximalen Sättigungsgrades des katalytisch aktiven Materials beträgt, und während der Dauer des Aufsprühens der Suspension praktisch konstant ist. Vorteilhaft soll der Wassergehalt der entstehenden Schale 40 bis 90%, insbesondere 50 bis 85% dieses Sättigungsgrades betragen. Der maximale Sättigungsgrad des katalytisch aktiven Materials ist die Menge Wasser in Gramm, die 100 g des katalytisch aktiven Materials in der Form seines Einsatzes beim erfindungsgemässen Herstellen der Schalenkatalysatoren unter folgenden Bedingungen aufnimmt: Zu 100 g des in einer Porzellanschale gerührten Pulvers wird innerhalb von 5 bis 10 min tropfenweise Wasser zugegeben, bis alles Pulver agglomeriert ist und die Agglomerate oberflächlich leicht feucht und klebrig werden.

Im Hinblick auf die schwierige Bestimmung des Wassergehaltes der Schale bei porösen Trägern, ist es in der Praxis zweckmässig, die Beschichtung so durchzuführen, dass die Einzelteilchen gerade noch als isolierte Teilchen durch die Sprühzone des Beschichtungsapparates rollen, d.h. keine Neigung zum Agglomerieren zeigen.

Beim Aufbringen des katalytisch aktiven Materials durch Aufsprühen der Suspension soll somit die entstehende Schale weder vollständig austrocknen — was z.B. durch eine zu hohe Temperatur und zu grosse Menge an indifferentem Gas hervorgerufen werden kann — noch soll die entstehende Schale an Wasser gesättigt sein — was z.B. durch zu niedere Temperatur und/oder zu geringe Menge an indifferentem Gas verursacht sein kann. Die weitere Bedingung, dass der Wassergehalt der entstehenden Schale während des Aufsprühens der Suspension praktisch konstant sein soll, erfordert praktisch eine zeitlich konstante Dosiergeschwindigkeit der Suspension und des Gases sowie eine konstante Gastemperatur. Auf diese Weise werden Schalen von besonderer Härte und Abriebfestigkeit erhalten und ferner ein Zusammenkleben der Teilchen während des Beschichtungsvorganges völlig vermieden. Wenn bei dem neuen Verfahren poröse Träger verwendet werden, deren Flüssigkeitsaufnahme grösser als 20% ihres Gewichts ist, so werden diese vor dem Aufsprühen der Suspension des katalytisch aktiven Materials vorteilhaft mit 1 bis 30%, vorzugsweise 1 bis 25% ihres maximalen Sättigungswertes vorbefeuchtet werden. Eine derartige Vorbefeuchtung erleichtert die Einstellung konstanter Betriebsbedingungen am Beginn der Beschichtung.

Die Menge des katalytisch aktiven Materials auf dem Träger kann in weiten Grenzen variieren und ist in der Regel bei verschiedenen aktiven Materialien unterschiedlich. Im allgemeinen beträgt ihre Menge 5 bis 300, vorzugsweise 6 bis 200 Gew.%, bezogen auf die Menge des Trägers. Das katalytisch aktive Material bildet auf der äusseren Oberfläche der Trägerteilchen ein festhaftende Schale von meist etwa 10 bis 1500 µm Dicke, die bei porösen Trägern auch in eine innere Randzone der oberflächennahen Makroporen der Trägerteilchen bis zu einer Tiefe von 1000 µm, insbesondere 20 bis 600 µm hineinreicht.

Während des Aufsprühens der Suspension des katalytisch aktiven Materials scheidet sich das katalytisch aktive Material unter teilweisem Verdampfen des Wassers auf den Trägerteilchen ab. In Abhängigkeit von dem Vorbefeuchtungsgrad und der Porosität der Trägerteilchen und den Teilchengrössen des katalytisch aktiven Materials in der Suspension tritt zunächst eine Abscheidung in den oberflächennahen Makroporen in einer dünneren oder dickeren inneren Randzone des jeweiligen Trägerteilchens ein, dann oder gleichzeitig auf der äusseren Oberfläche. Durch das Bewegen, beispielsweise das Rollen der Trägerteilchen, verfestigt sich das aufwachsende katalytisch aktive Material auf der äusseren Oberfläche zu einer zusammenhängenden, festhaftenden Schale, die, insbesondere nach der endgültigen Trocknung, bei Temperaturen von 20 bis etwa 140°C stattfinden kann, sehr abriebfest ist. Das Trocknen erfolgt mit Vorteil in dem Behälter, in dem die Beschichtung (das Aufsprühen) vorgenommen wurde, unter Bewegung, z.B. Rollen oder Schütteln der Schüttung der Katalysatorteilchen unter Überleiten von erwärmtem indifferentem Gas einer Temperatur von 20 bis 300°C, bis der Restwassergehalt der Schalenkatalysatoren im allgemeinen unter 5%, vorzugsweise 0,1 bis 3% insbesondere 0,2 bis 2 Gew.%, bezogen auf das Gesamtgewicht der Schalenkatalysatoren, beträgt. Eine Nachbehandlung, z.B. Calcinierung der erfindungsgemäss hergestellten Schalenkatalysatoren ist zwar ohne weiteres möglich, jedoch allgemein nicht erforderlich.

*Beispiel 1*

a) Ein katalytisch aktives Material der Zusammensetzung $Mo_{12}V_3W_{2,2}Cu_{2,2}O_x$ wird in an sich üblicher Weise hergestellt, indem man eine Lösung von 32,3 kg Ammonium-p-wolframat, 35 kg Ammoniummethavanadat und 212 kg Ammoniumheptamolybdat in 1400 kg Wasser bei 95°C löst und mit einer Lösung von 26 kg Kupfer-IIacetat in 350 kg Wasser sowie 10 kg Kupferhydroxidcarbonat versetzt und bei 110°C sprühtrocknet. Das sprühgetrocknete Pulver wird mit 0,15 kg Wasser je Teil des Pulvers verknetet und bei 140°C getrocknet. Anschliessend wird 2½ h bei von 230 bis 350°C nach und nach ansteigender Temperatur in einer ersten Stufe und dann innerhalb von weiteren 2½ h bei 400°C calciniert. Das calcinierte katalytisch aktive Material wird auf eine Teilchengrösse < 30 µm gemahlen. Sein maximaler Sättigungswert für Wasser bei 22°C beträgt 21%.

25 kg des gemahlenen katalytisch aktiven Materials werden in 16,7 kg Wasser suspendiert. Die ständig gerührte Suspension wird in einer Geschwindigkeit von 65,6 kg Suspension je Stunde mit einer handelsüblichen selbstreinigenden Zweistoffdüse (Verdüsungsdruck 4 bar, Treibluftmenge 19 $m^3$/h, Treiblufttemperatur 20 bis 25°C) auf 80 l (= 88 kg) Träger aufgesprüht. Der Träger besteht aus α-Aluminiumoxidkugeln eines Durchmessers von 4,7 mm, die eine maximale Wasseraufnahme von 17% (Porosität 34% und mittlerer Porendurchmesser 100 µm) und eine innere Oberfläche von 0,06 $m^2$/g haben. Die Trägerteilchen befinden sich in einem Dragierkessel von 200 l-Inhalt, der mit 11 Umdrehungen/min gedreht wird und durch den während des Aufsprühens 400 $Nm^3$/h auf 100°C erwärmte Luft durchgeleitet werden. Auf diese Weise wird die Temperatur im Dragierkessel auf 36 bis 40°C gehalten.

Nach Beendigung des Aufsprühens wird so lange weitere auf 100°C erhitzte Luft durchgeleitet, bis die Temperatur der Schüttung etwa 90°C hat und der Feuchtigkeitsgehalt der erhaltenen Schalenkatalysatoren auf etwa 0,8% gesunken ist (Katalysator A). Während des Beschichtungsvorganges beträgt der mittlere Wassergehalt 81% des maximalen Sättigungsgrads des aktiven Materials, errechnet formal aus dem Wassergehalt der Gesamtprobe und dem Anteil an aktivem Material.

b) Die unter a) angegebene katalytisch aktive, auf eine Teilchengrösse unter 30 µm gemahlene, calcinierte Material wird einer Menge von 16 g in 16 g Wasser suspendiert. Die Suspension wird auf 100 g (0,1 l) α-Aluminiumoxidringe einer inneren Oberfläche von 0,05 $m^2/g$ (einem Wasseraufnahmewert von 10% bzw. einer Porosität von 26%), wobei 85% der Poren einen Durchmesser von 50 bis 1500 µm aufweisen, einen Aussendurchmesser von 8 mm und einen Lochdurchmesser von 4 mm bei einer Länge von 5 bis 8 mm haben, gesprüht, die sich auf einem üblichen Drehteller eines Durchmessers von 30 cm befinden, der mit 35 Upm gedreht wird. Die Sprühgeschwindigkeit der Suspension beträgt 0,03 kg je Stunde, die Treibgasmenge 0,75 $Nm^3/h$. Durch indirektes Beheizen des Drehtellers werden die Ringe während des Beschichtungsvorganges auf eine mittlere Temperatur von 30°C erwärmt. Soweit erforderlich, werden während des Aufsprühens der Suspension durch geringe Änderung der Sprühgeschwindigkeit Schwankungen der Betriebsbedingungen derart ausgeglichen, dass sich die mehr und mehr beschichteten Ringe oberflächlich trocken anfühlen bzw. als isolierte Teilchen rollen. Nach Beendigung des Aufsprühens der Suspension des katalytisch aktiven Materials wird in einem Trockenschrank unter Überleiten von Luft allmählich auf 140°C aufgeheizt bis der Feuchtigkeitsgehalt des fertigen Schalenkatalysators 0,4 Gew.% betrug (Katalysator B).

Prüfung der Schalenkatalysatoren 1a und 1b:

a) Haftfestigkeit:
Jeweils 160 g der Schalenkatalysatoren werden 3 min in einem Drehteller von 30 cm Durchmesser bei 35 Upm gerollt und der Abrieb gravimetrisch bestimmt. Er beträgt bei dem Katalysator A weniger als 0,1 Gew.%, für den Katalysator B weniger als 0,08 Gew.%, bezogen auf die aktive Masse.

b) Haftfestigkeit beim Einfüllen in Reaktorrohre:
Jeweils 1 l der Katalysatoren A und B werden innerhalb von 30 s gleichmässig in ein Reaktionsrohr von 3 m Länge und 25 mm Durchmesser gefüllt und anschliessend abgelassen. Der Abrieb wird als Gewichtsanteil einer Teilchengrösse unter 2 mm bestimmt, er beträgt jeweils weniger als 0,02 Gew.%.

c) Oxidation von Acrolein zu Acrylsäure:
Die Katalysatoren werden in an sich üblicher Weise bei der Oxidation von Acrolein zu Acrylsäure eingesetzt. Die Testbedingungen und die Ergebnisse nach 200 Betriebsstunden sind in der folgenden Tabelle zusammengestellt:

| Katalysator | Rohrdurchmesser | Katalysatormenge ($cm^3$) | Gasdurchsatz Nl/h | Bad-temp. (°C) | Umsatz | Ausbeute (mol. %) Acrylsäure |
|---|---|---|---|---|---|---|
| A | 15 mm | 40 | Acrolein = 3,3<br>Luft = 33<br>$H_2O$-Dampf = 25 | 260 | 99,7 | 97,2 |
| B | 26 mm | 60<br>40 | $H_2O$-Dampf = 25 | 252<br>270 | 97<br>100 | 94<br>95 |

*Beispiel 2*

Ein katalytisch aktives Material der Zusammensetzung (Gewichtsteile)

$$1\ V_2O_5 \cdot 0{,}05\ Sb_2O_3 \cdot 0{,}01\ K_2O$$

wird hergestellt, in dem Kaliumnitrat und die Oxide des Vanadins und Antimons als Pulver gemischt und auf eine Temperatur oberhalb des Schmelzpunktes des Vanadinpentoxids (670°C) erhitzt werden. Die flüssige Schmelze wird in einer Blechwanne erstarren lassen und anschliessend gebrochen und zu einem Pulver eines Teilchendurchmessers < 30 µm vermahlen. Der maximale Sättigungsgrad dieser katalytisch aktiven Masse bei 22°C für Wasser beträgt 19,6 Gew.%.

6 g des gemahlenen katalytisch aktiven Materials werden in 12 g Wasser suspendiert und auf einem Drehteller auf 100 g (100 ml) α-Aluminiumoxidringe aufgesprüht. Die Drehzahl des Drehtellers beträgt 35 Umdrehungen je Minute, die Temperatur der Schüttung wird auf 26°C gehalten und die Sprühgeschwindigkeit beträgt 0,036 kg Suspension je Stunde bei einer Treibgasmenge von 0,75 $Nm^3/h$ (22°C). Die Aluminiumoxidringe haben einen Aussendurchmesser von 8 mm, einen Lochdurchmesser von 4 mm und eine Länge von 5 bis 8 mm.

Ihre innere Oberfläche beträgt 0,03 $m^2/g$, der mittlere Porendurchmesser 70 µm und der Wasseraufnahmewert 10%. Bei der Beschichtung beträgt der Befeuchtungsgrad praktisch konstant 86% des maximalen Sättigungswertes.

Nach dem Aufsprühen wird der erhaltene Schalenkatalysator bei 140°C unter Überleiten von Luft einer Temperatur von 140°C auf einen Restwassergehalt von 0,4% getrocknet.

20 ml des Schalenkatalysators werden in einen Laborreaktor gegeben und dort bei 406°C ein Gasgemisch aus 2 Nl/h p-tert.-Butyltoluol, 20 Nl/h Luft und 15 Nl/h Wasserdampf umgesetzt. Die Ausbeute an p-tert.-Butylbenzaldehyd beträgt 7,4 mol.%, die Ausbeute an p-tert.-Butylbenzoesäure 7,1 mol.% und der Umsatz 23,2%. Die Gesamtselektivität, bezogen auf beide Produkte, beträgt 62,5 mol.%.

Der Schalenkatalysator ist sehr abriebfest und sein Abriebverlust, geprüft mit einer 100 g Probe nach der bei Beispiel 1 unter a angegebenen Methode, beträgt nur 0,05%, bezogen auf die aktive Masse.

*Beispiel 3*

Ein katalytisch aktives Material der Zusammensetzung $Mo_{12}NiCo_7Fe_3BiB_2Sb_{0,1}K_{0,14}O_{56,7}$ wird nach den Angaben von Beispiel 1 der GB-A Nr. 1491750 hergestellt. Die katalytisch aktive Material wird auf ein Teilchengrösse von 30 µm gemahlen. Der maximale Sättigungsgrad dieses katalytisch aktiven Materials für Wasser bei 22°C beträgt 33,4%.

157 g des gemahlenen katalytisch aktiven Materials werden in 143 g Wasser suspendiert und die Suspension mit einer Geschwindigkeit von 0,16 kg/h auf 100 g (0,076 l) Steatitkugeln eines Durchmessers von 1,5 bis 2,5 mm und einer Porosität von 1% aufgesprüht. Der Träger befindet sich dabei auf einem Drehteller von 30 cm Durchmesser, der eine Drehzahl von 35 Umdrehungen je Minute hat und der auf eine Temperatur von 40 bis 50°C indirekt beheizt ist. Die Treibgasmenge mit der die Suspension durch eine Zweistoff-Zerstäubungsdüse versprüht wird, beträgt 0,75 $Nm^3$/h Luft einer Temperatur von 22°C. Der Wassergehalt während des Beschichtungsvorgangs beträgt im Mittel 77% des maximalen Sättigungsgrades. Nach Beendigung des Aufsprühens wird der erhaltene Schalenkatalysator 16 h bei 80°C auf einen Restwassergehalt von 0,6% getrocknet.

Zur Prüfung des erhaltenen Schalenkatalysators werden 43 $cm^3$ des Katalysators in einem Reaktionsrohr eines Durchmessers von 12 mm, das sich in einem Salzbad befindet, bei 392°C stündlich mit einem Gasgemisch aus 3Nl Isobuten, 36 Nl Luft und 28 Nl Stickstoff beschickt, wobei das Isobuten zu Methacrolein und Methacrylsäure oxidiert wird. Der Umsatz beträgt 93,6 mol.%, die Ausbeuten 80 mol.% Methacrolein und 1,5 mol.% Methacrylsäure. Die Selektivität, bezogen auf die Summe beider Produkte, beträgt 87 mol.%

Wird der Reaktor bei 268°C betrieben und ein Gasgemisch aus stündlich 3 Nl Isobuten, 37 Nl Luft und 24 Nl Wasserdampf übergeleitet, so beträgt die Ausbeute 81 mol.% Methacrolein und 1,5 mol.% Methacrylsäure bei einer Gesamtselektivität von 84 mol.%.

Die Abriebfestigkeit der Schalenkatalysatoren, gemessen mit einer 100 g Probe nach der inBeispiel 1 unter a angegebenen Methode beträgt 0,1%.

*Beispiel 4*

Gemäss Beispiel 1 der GB-A Nr. 1381144 wird ein pulverförmiges Gemisch von 24,06 g $V_2O_5$ und 0,44 g $H_6TeO_6$ bei 670°C geschmolzen. Nach dem Erkalten wird die Masse gebrochen und zu einem Pulver einer Teilchengrösse $< 30\,\mu$ gemahlen.

Das so hergestellt katalytisch aktive Material wird in 25 g Wasser suspendiert und unter den in Beispiel 2 angegebenen Bedingungen auf 343 g (0,327 l) Mullitkugeln eines Durchmessers von 5 bis 7 mm aufgesprüht.

Die beschichteten Kugeln werden auf 0,2% Restfeuchte getrocknet.

Der Abriebverlust des fertigen Katalysators nach der bei Beispiel 1 unter a angegebenen Methode beträgt etwa 0,1%, bezogen auf die aktive Masse.

Der Katalysator eignet sich vorzüglich für die Gasphasenoxidation von 1-Methyl-3-phenylindan bei Temperaturen von 440°C zu Anthrachinon.

**Patentansprüche**

1. Verfahren zur Herstellung von Schalenkatalysatoren mit

a) einem inerten Träger eines Teilchendurchmessers von mindestens 100 µm und einer Oberfläche bis 20 $m^2$/g, und

b) einer auf der äusseren Oberfläche und in der oberflächennahen Randzone der Trägerteilchen festhaftenden Schale, die das katalytisch aktive Material enthält,

durch Aufbringen des katalytisch aktiven Materials als 10 bis 70%ige Suspension in Wasser auf die bewegten Trägerteilchen bei einer Temperatur des Trägers unterhalb 70°C und anschliessendes Trocknen der beschichteten Trägerteilchen, dadurch gekennzeichnet, dass man die Suspension in einer gleichbleibenden Menge von 0,01 bis 2,0 kg aktives Material/h/l Träger unter gleichmässigem Überleiten von 0,1 bis 12 $Nm^3$/h/l Träger eines indifferenten Gases einer Temperatur von 20 bis 150°C derart auf die Trägerteilchen sprüht, dass der Wassergehalt der entstehenden Schale 30 bis 95% des maximalen Sättigungsgrads des katalytisch aktiven Materials beträgt und während der Dauer des Aufsprühens der Suspension praktisch konstant bleibt.

2. Verfahren nach Anspruch 1, dadurch gekennzeichnet, dass ein poröser Träger eingesetzt wird, dessen mittlerer Porendurchmesser über 20 µm beträgt und dass die Teilchengrösse des katalytisch aktiven Materials kleiner als der mittlere Porendurchmesser des Trägers ist.

3. Verfahren nach den Ansprüchen 1 und 2, dadurch gekennzeichnet, dass der Träger vor dem Aufsprühen der Suspension des katalytisch aktiven Materials mit Wasser auf 1 bis 30% seines maximalen Wasseraufnahmewertes vorbefeuchtet wird.

4. Verfahren nach Anspruch 1, dadurch gekennzeichnet, dass das katalytisch aktive Material die Zusammensetzung

$$Mo_{12}V_aW_bA_cB_dO_x$$

hat, in der

A für Cu und/oder Eisen,

B für Ni, Mn, Sn, Sb, Cr, Ca, Sr, Ba, Mg, Na, K, Rb, Cs und/oder P,

a für 0,5 bis 16,

b für 0,1 bis 8,

c für 0,6 bis 6,

d für 0 bis 3, und

x für die Zahl der zur Absättigung der Valenzen der anderen Bestandteile erforderlichen Sauerstoffatome stehen.

5. Verfahren nach Anspruch 1, dadurch gekennzeichnet, dass das katalytisch aktive Material die Zusammensetzung

$$Mo_{12}Bi_aFe_bX_cY_dZ_eO_x$$

hat, in der

X für Ni und/oder Co und gegebenenfalls zusätzlich Sn, Zn und/oder Mg,

Y für K, Na, Rb, Cs, In, Sb und/oder Tl,

Z für P und/oder B,

a für 0,1 bis 4,

b für 0,5 bis 6,

c für 2 bis 12,

d für 0,01 bis 1,

e für 0 bis 3 und

x für die Zahl der zur Absättigung der Valenzen der anderen Bestandteile erforderliche Sauerstoffatome stehen.

## Claims

1. A process for the preparation of a coated catalyst comprising:

a) an inert carrier having a particle diameter of at least 100 µm and a surface area of up to 20 m²/g, and

b) a coating which contains the catalytic material and adheres firmly to the outer surface and to the edge zone, near the surface, of the carrier particles,

by applying the catalytic material as a 10-70% strength suspension in water to the agitated carrier particles, which are at below 70°C, and subsequently drying the coated particles, characterized in that the suspension is sprayed, at a constant rate of from 0.01 to 2.0 kg of active material/h/l of carrier onto the carrier particles, whilst at the same time uniformly passing from 0.1 to 12 m³ (S.T.P.)/h/l of carrier of an inert gas at from 20 to 300°C over the carrier particles, so that the water content of the resulting coating is 30 to 95% of the maximum degree of saturation of the catalytic material and remains virtually constant during the period of spraying on the suspension.

2. A process as claimed in claim 1, characterized in that a porous carrier having a mean pore diameter of more than 20 µm is employed, and that the particle size of the catalytic material is less than the mean pore diameter of the carrier.

3. A process as claimed in claims 1 and 2, characterized in that the carrier is pre-moistened with water to 1-30% of its maximum water absorbency before spraying it with the suspension of the catalytic material.

4. A process as claimed in claim 1, characterized in that the catalytic material has the composition

$$Mo_{12}V_aW_bA_cB_dO_x$$

where:

A is Cu and/or iron,

B is Ni, Mn, Sn, Sb, Cr, Ca, Sr, Ba, Mg, Na, K, Rb, Cs and/or P,

a is from 0.5 to 16,

b is from 0.1 to 8,

c is from 0.6 to 6,

d is from 0 to 3, and

x is the number of oxygen atoms required to saturate the valencies of the other constituents.

5. A process as claimed in claim 1, characterized in that the catalytic material has the composition

$$Mo_{12}Bi_aFe_bX_cY_dZ_eO_x$$

where:

X is Ni and/or Co, with or without Sn, Zn and/or Mg

Y is K, Na, Rb, Cs, In, Sb and/or Tl

Z is P and/or B,

a is from 0.1 to 4,

b is from 0.5 to 6,

c is from 2 to 12,

d is from 0.01 to 1,

e is from 0 to 3, and

x is the number of oxygen atoms required to saturate the valencies of the other constituents.

## Revendications

1. Procédé de préparation de catalyseurs-coquilles, comprenant:

a) un support inerte d'un diamètre de particules d'au moins 100 µm et d'une surface allant jusqu'à 20 m²/g, et

b) une coquille adhérente sur la surface externe et dans la zone limite voisine de la surface externe des particules de support, qui contient la matière à activité catalytique,

par application de la matière à activité catalytique, sous forme de suspension à 10 à 70% dans l'eau, sur les particules de support en mouvement, à une température du support inférieure à 70°C, suivie du séchage des particules de support enduites, caractérisé par le fait que l'on pulvérise, sur les particules de support, la suspension au débit constant de 0,01 à 2,0 kg de matière active/h/l de support, avec passage régulier de 0,1 à 12 m³N/h/l de support d'un gaz indifférent d'une température de 20 à 150°C, de telle sorte que la teneur en eau de la coquille obtenue soit de 30 à 95% du degré de saturation maximal de la matière à activité catalytique et demeure pratiquement constante pendant la durée d'application par pulvérisation de la suspension.

2. Procédé selon la revendication 1, caractérisé par le fait qu'on utilise un support poreux, dont le diamètre moyen des pores est supérieur à 20 µm, et que la grosseur des particules de la matière à activité catalytique est plus petite que le diamètre moyen des pores du support.

3. Procédé selon les revendications 1 et 2, caractérisé par le fait que le support, avant la pulvérisation de la suspension de matière à activité catalytique, est préhumidifié à 1 à 30% de sa capacité d'absorption maximale.

4. Procédé selon la revendication 1, caractérisé par le fait que la matière à activité catalytique a la composition

$$Mo_{12}V_aW_bA_cB_dO_x$$

dans laquelle:

A représente Cu et/ou fer,
B Ni, Mn, Sn, Sb, Cr, Ca, Sr, Ba, Mg, Na, K, Rb, Cs et/ou P,
a 0,5 à 16,
b 0,1 à 8,
c 0,6 à 6,
d 0 à 3, et
x représente le nombre des atomes d'oxygène nécessaires pour saturer les valences des autres participants.

5. Procédé selon la revendication 1, caractérisé par le fait que la matière à activité catalytique a la composition

$$Mo_{12}Bi_aFe_bX_cY_dZ_eO_x$$

dans laquelle:

X représente Ni et/ou Co et éventuellement, en outre, Sn, Zn et/ou Mg,
Y représente K, Na, Rb, Cs, In, Sb et/ou Tl,
Z P et/ou B,
a 0,1 à 4,
b 0,5 à 6,
c 2 à 12,
d 0,01 à 1,
e 0 à 3, et
x représente le nombre des atomes d'oxygène nécessaires pour saturer les valences des autres participants.